# EUROPEAN PATENT SPECIFICATION

(11) **EP 3 823 734 B1**
(45) Date of publication and mention of the grant of the patent: **03.09.2025**
(21) Application number: 19842148.9
(22) Date of filing: 22.07.2019
(51) Int. Cl.: A63B 37/00, A63B 37/04, C08L 23/08, A63B 57/00, A63B 69/36, A63B 71/06

(54) **SYSTEMS AND METHODS FOR PROVIDING A PUTTING TRAINING AND PRACTICE DEVICE FOR IMPROVING PUTTING ACCURACY BY REDUCING VARIANCE**
SYSTEME UND VERFAHREN ZUR BEREITSTELLUNG EINER PUTTING-TRAININGS- UND ÜBUNGSVORRICHTUNG ZUR VERBESSERUNG DER PUTTING-GENAUIGKEIT DURCH VERRINGERUNG DER VARIANZ
SYSTÈMES ET PROCÉDÉS FOURNISSANT UN DISPOSITIF D'ENTRAÎNEMENT ET D'EXERCICE AU PUTTING PERMETTANT D'AMÉLIORER LA PRÉCISION DU PUTTING PAR RÉDUCTION DE LA VARIANCE

(30) Priority: 22.07.2018 US 201862701801 P
(43) Date of publication of application: 26.05.2021
(73) Proprietor: Heard, Irvin Kornel, Oceanside, CA 92057 (US); Henderson, Steve, Cedar Park TX 78613 (US)
(72) Inventor: Heard, Irvin Kornel, Oceanside, CA 92057 (US); Henderson, Steve, Cedar Park TX 78613 (US)
(74) Representative: Appleyard Lees IP LLP
(86) International application number: PCT/US2019/042893
(87) International publication number: WO 2020/023426

(56) References cited:
- US-A- 4 886 275
- US-A1- 2002 045 495
- US-A1- 2002 094 885
- US-A1- 2002 156 147
- US-A1- 2004 067 801
- US-A1- 2004 209 701
- US-A1- 2012 295 737
- US-A1- 2017 056 731
- US-A1- 2018 147 451
- US-B1- 9 149 704
- US-B2- 6 616 551
- US-B2- 8 647 219

## Description

### BACKGROUND

This application claims the benefit of U.S. Provisional Patent Application No. 62/701,801, entitled "Putting Training Device," filed July 22, 2018.

### 1. Field of the Disclosure

This disclosure is directed to exemplary embodiments of methods and devices for use as golf putting training aids, and particularly to spherical components, spherical bodies or spheres that are in a shape and composition as less-than-standard sized undersized, smaller-than-standard diameter and/or miniature balls, constructed to have a similar weight and feel at impact, as a standard-sized golf ball.

### 2. Description of the Related Art

Golf is one of the most prolific pastimes in the United States, as well as around the world. The golf economy alone is estimated to be in excess of $70 billion worldwide. Amateur golfers tune in to televised tournaments weekly to watch their favorite professional golfers undertake at the highest levels a pastime that every individual can try, and with practice become very good at. Amateur enthusiasts in large numbers head to their local sporting goods store to purchase the best equipment ranging from clubs to apparel to every form of technology available to aid in improving their golfing experience and performance.

Amateur golfers make use of myriad resources to improve their games in all forms of training settings. They read golf industry articles and spend a great deal of money on both live and on line lessons with local golf instructors and teaching pros around the world. They purchase practice nets and practice putting mats in an attempt to "simulate" more realistic conditions in their practice routines. An objective is, through repetition, to hone one's muscle memory such that, with few adjustments, and even fewer exceptions, every swing of every club is essentially the same. Deviations in set-up, swing tempo, awing arc and the like are generally then only introduced in situations in which the golfers find themselves in a position of needing to get "out of trouble," or when the distance to the pin, while still off the green, and measured with various forms (and price ranges) of ranging and distance measuring devices, falls inside a range of a full swing with the golfer's "loftiest" wedge.

As adaptive technologies advance in the golf industry, sensors are mounted on practice tees, putting greens/mats, and often affixed to the shafts grips of various clubs in a particular golfer's bag to sense myriad parameters in a golfer's swing. Video replay is finding broader acceptance for swing analysis. Virtually anyone and everyone who thinks about it for more than a minute comes up with the new and better training aid, device, regimen, application and the like. The objective of all of these tee-to-green devices is to enhance that quality of repetition so as to hone the muscle memory such that each swing is properly choreographed to obtain maximum (selectable) distance with controlled accuracy so as to keep the ball in the fairway, or as they say "on the short grass."

Everyone from the touring pro to the teaching pro at the local municipal course will inform the amateur golfers that "the game" can be fairly simple. It involves a good set-up with repeatable swing mechanics in order to hone that part of the game that advances the golfer from tee to green. Were it that simple, however, the amateurs would not be spending so much time and money to master the required skills.

Certain basics nuances of the sport can only be overcome through repetitive practice. Different "parts" of the game require different practice routines to achieve competent results. Putting is one such part of the game that, when mastered through repetitive training, can shave strokes off one's round, thereby leading to the attainment of that lowered handicap that gives one a sense of accomplishment and satisfaction. Among the most overused cliché statements in all of golf are the trite sayings "Drive for show, putt for dough" and "It's not how you drive, it's how you arrive that matters." Putting has the distinct advantage of lending itself to practice virtually anywhere there is a smooth surface more than 3 metres (10 feet) long where, at one end, the golfer can place virtually any version of a target to aim.

Consider the broad array of golf putting practice mats, cups, ball returns, "aiming" attachments of every design and other like devices from the comparatively simple to ultra-sophisticated, all designed to enhance the individual's putting training regimen. The objective, of course, is to repeatedly compel the ball to traverse the last 46 or fewer cm (18 or fewer inches), to the last 15 or more metres (50 or more feet) in a single stroke of the putter in order that the work of getting from tee to green pays off as strokes are saved from well-practiced putting techniques.

As discussed, there are a number of conventional solutions which have been tried to overcome putting errors through repetitive practice. Few, if any, of these "solutions" have proven successful in appropriately addressing sighting or sight picture issues to ensure that the ball is made to travel precisely along its intended path. Many of the proposed "solutions" have gained broad acceptance, yet these solutions generally do not specifically address the sighting shortfalls in an easily employable manner. US 2018/147451A1 (Kamino Kazuya et al); US 2004/209701 A1 (Finkel Robert) and US8647219B1 (Kim Hyoungchol et al) describe examples of the related art.

### SUMMARY

Line-up, set-up, swing, precise impact, and follow-through are all combined to achieve the desired repeatable result when putting. Control of one or more of these parameters is the objective of every "putting aid" on the market. The promises that are made entice golfers to purchase and use the array of putting aids systematically between rounds when they have some time to practice.

Consider that there may be a device that repeatedly improves more precise line-up, set-up and impact mechanics leading to a new "sight picture" for the putting practice sessions.

Based on the foregoing, it would be advantageous to provide a device that may be sub-sized and easily manufactured to tighten the sighting and set up of practice putts. The invention relates to a golf training ball as claimed in claim 1 and a method of forming the ball as claimed in claim 10.

Exemplary embodiments of the systems, methods and devices according to this disclosure may provide a golf putting training aid in a form of a reduced-diameter ball that may aid in refining one's putting mechanics.

Exemplary embodiments may provide spherical components, spherical bodies or spheres that are in a shape and composition as less-than-standard sized, undersized, smaller-than-standard diameter and/or miniature balls, constructed to have a similar weight and feel at impact, as a standard-sized golf ball.

Exemplary embodiments may provide a putting refinement ball that is some percentage smaller, for example, approximately 60% smaller, and in one exemplary refinement, 58.6% smaller than a regulated golf ball.

In embodiments, the disclosed systems, devices, methods, techniques and/or schemes may improve a user's putting performance through repetitive training by re-calibrating and precision tuning the user's overall and specific point of focus from ball address to take away and through ball impact at the point to striking in the pendulum swing of the putter.

In embodiments, an ability to more clearly focus on a smaller target for impact may have shown, though experimental results that the user's take away tends to improve to a near perfect 90° perpendicular linear path.

In embodiments, use of disclosed devices in a training regimen may reduce the user's tendency to push or pull the ball at the point of impact by providing a narrower point of precise focus for the user.

In embodiments, based on the smaller size of the disclosed sphere or ball relative to the size of the standard golf cup, users may be trained to putt to the "back of the hole" on medium to short range putts of, for example, 3.7 metres (12 feet) or less. In this regard, the user may be trained to refocus on a 4.8 mm (3/16") target rather than a 108 mm (4.25") diameter hole, with the inherent azimuth deviation errors that the larger target focus tends to induce.

As will be described in specific detail below, the disclosed embodiments may be directed to a unique construct of a putting training aid in the form of a smaller than standard sized ball device that has been refined through extensive experimentation and testing to provide distinct advantages in line-up, set-up and impact refinement while providing the consistent feel and haptic feedback to the user as though striking a standard sized golf ball.

These and other features, and advantages, of the disclosed systems and methods are described in, or apparent from, the following detailed description of various exemplary embodiments.

### BRIEF DESCRIPTION OF THE DRAWINGS

Various exemplary embodiments of the disclosed unique systems, methods and devices for use as golf putting training aids, and particularly to spherical components, spherical bodies or spheres that are in a shape and composition as less-than-standard sized undersized, smaller-than-standard diameter and/or miniature balls, constructed to have a similar weight and feel at impact, as a standard-sized golf ball, will be described, in detail, with reference to the following drawings, in which:
FIG. 1 illustrates a schematic diagram of a point of focus grid overlying a standard sized golf hole for perspective;
FIG. 2 illustrates comparative examples of differing size spherical components, spherical bodies or spheres that are in a shape and composition as training balls according to this disclosure in comparison to a regulation size golf ball;
FIG. 3 illustrates schematic diagrams of differing compositions of an internal structure of the spherical components, spherical bodies or spheres that are in a shape and composition of training balls according to this disclosure;
FIGs. 4 and 5 illustrate comparative examples as to how use of the smaller training balls according to this disclosure may aid in focusing one's practice "sight picture" in order to more rapidly assess deviations from mishits; and
FIG. 6 illustrates a flowchart of an exemplary method for forming the spherical components, spherical bodies or spheres that are in a shape and composition as training balls according to this disclosure.

### DETAILED DESCRIPTION OF EMBODIMENTS

The disclosed unique system, method and apparatus for providing and employing as golf putting training aids, particularly to spherical components, spherical bodies or spheres that are in a shape and composition of less-than-standard sized undersized, smaller-than-standard diameter and/or miniature balls, constructed to have a similar weight and feel at impact, as a standard-sized golf ball, will be described as being particularly usable for that purpose. This single real-world application for the systems, methods and devices according to this disclosure should, however, not be considered as limiting the disclosed embodiments to only that purpose. Rather, the disclosed embodiments are intended to provide an overview of a particular real-world scenario for employment of such systems, methods and/or devices. Any advantageous employment of a similarly configured devices that may be used to allow a user to focus the user's control of, for example, the impact with the device that may benefit from the teachings of the disclosed embodiments are intended to be encompassed by the detailed description that follows.

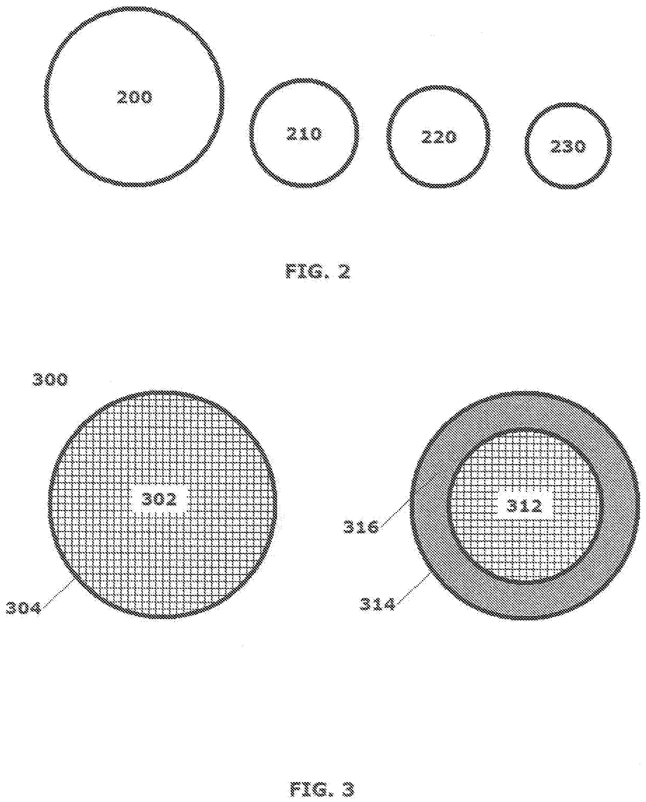

The disclosed systems, devices, methods, techniques and/or schemes will be described as being particularly adaptable smaller-than-standard diameter balls (when compared to a standard sized golf ball) as training aids. Reference will be made to exemplary embodiments described and depicted in this disclosure having a certain structural composition, which may typically may be a monolithic (homogeneous) ball of particular material composition as opposed to a composition having a spherical core of a particular diameter and material composition, and one or more concentric layers of particular thicknesses and material compositions applied according to known techniques over that spherical core to produce a finished regulated golf ball. Such references to should not be interpreted as specifically limiting the disclosed systems, devices, methods, techniques and/or schemes to any particular configuration as to the particular material or materials from which the disclosed balls may be formed, nor to any particular limiting reduction in diameter with respect to the diameter of a standard golf ball. While exemplary compositions may be monolithic, compositions of numbers of layers over a core, thicknesses of those layers and materials from which those layers may be formed are not necessarily precluded. *See* FIG. 3. The descriptions, and the associated references, are intended to provide a particular set of parameters adapted to address a particular real-world use case in which the systems, devices, methods, techniques and/or schemes according to this disclosure may be particularly beneficially adapted for use. These references are intended to be illustrative only and should not be considered as limiting the disclosed systems, devices, methods, techniques and/or schemes to any particular embodiment, application, operational/ training scenario or use case.

Exemplary embodiments of the disclosed devices and according to the disclosed schemes may be beneficially adapted to address a particular shortfall in prior art systems as follows.

When putting with a standard-size ("regulated") golf ball, hitting the golf ball with a 90° perpendicular strike is not necessarily evident to the golfer. This is one of the reasons why so many putts are missed in azimuth. Simply put, regardless of the care with which the lining up of the putt and the address of the ball with the putter are made, by not pulling the putter back in a straight line (linear) manner, the golfer may end up pulling or pushing the golf ball off line strictly from the point of impact on a fairly consistent basis. The repetitiveness with which the golfer may do this in an extended putting training session will reinforce improper sensing and "muscle memory." Consequently, the golfer will make other "adjustments" at address to "compensate for" rather than to "correct" common errors to well ingrained in their approach over time.

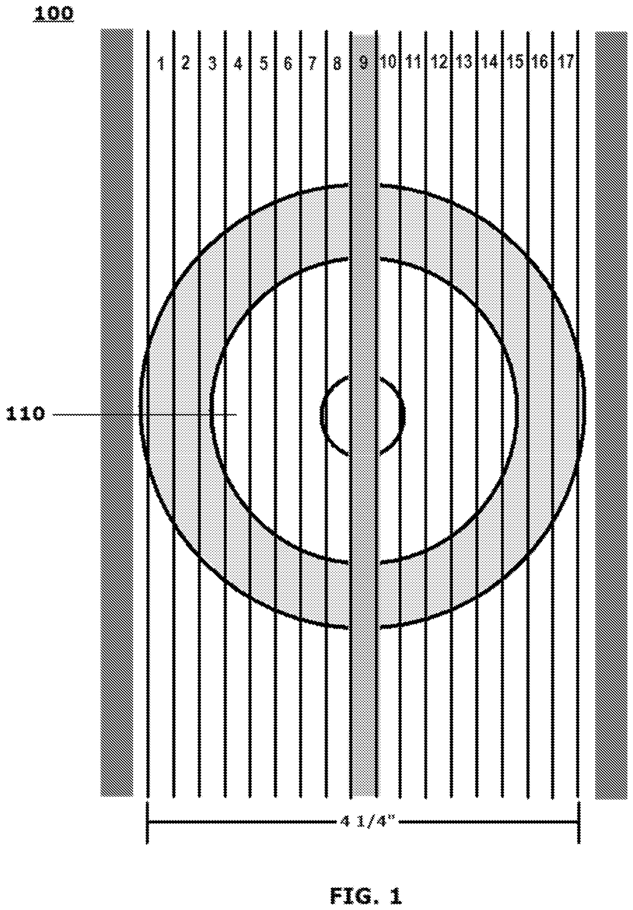

FIG. 1 illustrates a schematic diagram of a point of focus grid 100 overlying a standard sized golf hole for perspective. As shown in FIG. 1, given the relative size of the regulated golf hole 110 (at 4.25") in relation to the regulated golf ball (at 1.68"), the hole 110 is 253% larger than the ball. The surface contact between the regulated golf ball and green is approximately 6 mm (one quarter of an inch). This translates to 17 variable paths the ball can travel to the hole in the manner shown in FIG. 1.

This variability may be referred to as "Putting to Variance," a term that the inventors have applied in teaching techniques including those which advantageously include devices according to the disclosed embodiments. Consider a new standard in which a putt traveling down lane 14 (*see* FIG. 1), for example, is not considered to be a good putt. There is no reasonable assurance that the user chose the correct line or struck the ball with a 90 degree perpendicular motion such that, as the ball approached the hole it was accurately tracking. Even if the putt drops, the user may have a false sense of accuracy with respect to the ultimate line of the putt across, and into, the hole. In this regard, on a next attempt, a putt struck down lane 14, ostensibly with the same "sight picture" and the same stroke, may not fall. Practice to the hole in this regard may be considered as introducing an inherent variability. The introduced "Putting to Variance" tends to cause variability in each putt.

Routine use of the disclosed devices has been shown through substantial experimentation to restrict, or otherwise generally eliminate such "Putting to Variance." Golfers have generally learned to accept the "Putting to Variance" paradox and the resultant manifestation in the routine inability to make putts. Golfers will take steps to compensate for it, but have traditionally not found ways to eliminate it. The difficulty is that, due to this "Putting to Variance," a golfer does not cognitively perceive that the individual may be practicing to the extremes in variance therefore, not practicing to a consistent limited target with a consistent and measurable result. This inconsistency in practice tends to exacerbate itself in reduced confidence for the golfer in executing a perfect, consistent and reliable putting stroke.

Exemplary embodiments may cause a user to focus much more critically on putting to lane 9. Any variability at the hole then may be increasingly or substantially limited to lanes 8 or 10 when the ball is not struck perpendicularly, rather than with random excursions to lanes 1-4 or 14-17.

FIG. 2 illustrates comparative examples of differing size spherical components, spherical bodies or spheres that are in a shape and composition of training balls according to this disclosure in comparison to a regulation size golf ball. As shown in FIG. 2, exemplary embodiments provide a particularly-configured practice/training ball 210,220,230 that may have a diameter in a range of between 22mm and 41mm, as compared to the regulated golf ball 200 having a diameter of 42.7mm. The particularly-configured practice/training ball 210,220,230, may have a weight in a range of range between 15g and 44g (typically closer to the higher end of this range, as compared to the regulated golf ball having an official weight not to exceed 45.93 grams.

FIG. 3 illustrates schematic diagrams 300 of differing compositions of an internal structure of the spherical components, spherical bodies or spheres that are in a shape and composition of training balls according to this disclosure. As shown in FIG. 3, in embodiments, the particularly-configured practice balls according to this disclosure may be of a limitedly-layered (substantially monolithic) construction having a substantial homogeneous spherical core element 302 surrounded by an outer protective (or durable) coating 304. In other embodiments, however, the particularly-configured practice balls according to this disclosure may be formed of a layered construction in which a spherical core element 312 may be surrounded by one or more layers 316 and ultimately encased in an outer protective (or durable) coating 314.

A particularly-configured monolithic structure, or a core structure, for the disclosed practice ball is formed of a mixture of a solid material such as, for example, a mesh stainless steel powder, or other metal material, or one or more stone derivatives, and a binding material such as, for example a urethane, a polyurethane, an adhesive or another composite or matrix material used to bind the mixture. The dense powder and urethane composed monolithic construct may be coated with, or colored with, a coloring agent such as, for example, a polyurethane paint or a urethane dye for aesthetics and may be clear coated with polyurethane plastic or any other coating for durability. Other combinations of densities of materials may be substituted without deviating from the scope and content of this disclosure. In embodiments, a particularly-configured monolithic practice ball structure 302 may be formed, for example, of a mixture of 320 mesh stainless steel powder and 60 Shore - D Urethane. The 320 mesh powder and urethane composed monolithic construct may be coated as discussed above, equally for durability. In a layered structure, the core 312 may be formed of the mixture of 320 mesh stainless steel powder and 60 Shore - D Urethane. Otherwise, the core 312 may be formed of a different material with the stainless steel powder/urethane composition being provided in the outer layer 316. All combinations and variations of the disclosed structures are available and encompassed by this disclosure. Further, it is recognized by experts in the materials industry that there are more than 500 urethane/polyurethane chemicals and chemical compounds that vary in density. In this regard, it is anticipated that, for example, mixtures of stainless steel to urethane for the monolithic, or other core, structure may be in a range at least between 87% or less Stainless Steel and 13% or less Urethane to 83% or less Polyurethane and 17% or less Stainless Steel when the disclosed practice balls are in mass production.

The outer surface of the training balls, which may be of the outer protective (or durable) coating 304,314 of the disclosed embodiments of the practice ball is substantially smooth, in some contrast to the dimpled regulated golf ball. An objective of producing a practice ball according to this disclosure with a substantially smooth surface may be to reduce the friction between the ball and the surface on which it rests/rolls. This is not, however, to imply that all dimpling or surface texture must necessarily be removed. The variance in the "look" as to the disclosed embodiments is purposeful in that the practice ball be, in no way, mistaken for a regulated golf ball, which it is not, nor is it intended to be.

Differentiators then between the disclosed embodiments and a regulated golf ball include that practice balls according to the disclosed embodiments are neither designed nor intended for high velocity club strikes in which necessary coefficients of elastic restitution and/or resilience are brought into play to extend ball flight. Embodiments according to this disclosure may be considered to be designed and formulated principally for putting and in other scenarios in which comparatively lower ball impact occurs.

In monolithic embodiments, such a construct may better ensure a somewhat "truer" track to the balls. Taken to its extreme, the exemplary monolithic structure may substantially ensure that the practice balls according to this disclosure roll more perfectly, more stably and/or more "pure" due to the absence of a separate core. Regulated golf balls, often times, go through buoyancy testing in order to determine where their center of gravity lies otherwise their roll may be less pure. The various layers in the inherent construction of the regulated golf ball may create "variances" between the core and the walls within which the core is protected. This is a common challenge in the golf ball manufacturing industry. A monolithic structure tends to reduce variances in quality control, thereby lowering production costs while still providing a reliable construct.

Separately, drag is a significantly reduced performance factor, as well, based on the lower impact use cases, including putting. In this regard, a smooth outer surface may aid in making it more difficult for the disclosed practice ball to "hold its line" in instances in which the practice ball is not correctly struck by the putter. This feature has the advantage of accentuating for practice any effect of putter impact errors when the practice ball is struck in order that those errors are corrected rather than further or separately compensated for. The dimpled surface of regulated golf balls exhibit comparatively more friction when struck and tend to "hold their line" when struck. The smooth surface of the disclosed practice balls may tend to promote "sliding" if not struck substantially correctly on any given surface.

Those of skill in the art recognize that the anatomy of a regulated golf ball is such that it may often be formed of a combination of layers. The multi-layered construction of the regulated golf ball may include a comparatively "soft" inner core, a higher impact resistant and/or resilient outer core, one or more highly impact resistant and/or resilient "mantle" layers radially outward from the core(s) (with each mantle layer being intended to work in concert to aid in reducing ball spin when, for example, having been subjected to the force at impact of being struck by a driver as excessive ball spin tends to cause the regulated golf ball to soar higher in the air with a resultant loss of distance), and a urethane composite dimpled outer cover which is generally painted.

By contrast, the anatomy of the disclosed practice ball may include a substantially monolithic or homogeneous form. In embodiments, it is the weight and density of the substances from which the disclosed embodiments is formed, including, but not limited to, mesh stainless steel powder or any other metal or stone derivatives and urethane or any other composite used to bind the component, that may afford the disclosed practice ball a substantially same "feel" to that of the multi-layer regulated golf ball when struck in low impact scenarios, including during putting practice.

This disclosed combination of features may aid in reducing or substantially eliminating the "Putting to Variance" paradox described above that generally every golfer goes through. By reducing the diameter of the practice ball, compared to a regulated golf ball by as much as 58%, and eliminating the "dimples" in the practice ball, a configuration of the practice ball makes the process of putting training substantially more rigorous. The golfer may be provided increased immediate feedback as to the golfer's deviations from a desirable 90° perpendicular ball strike.

Embodiment of the disclosed practice ball, based for example on the difference in size and the incumbent level of focus needed to putt it, may provide the golfer with enhanced immediate feedback as to whether the putt is pushed or pulled. Embodiments of the disclosed practice balls generally need to be struck more squarely to avoid significantly more errant movement with respect to an intended putt line, affording the golfer the opportunity to refine the golfer's putting skills in response to immediately perceptible physical and visual cues.

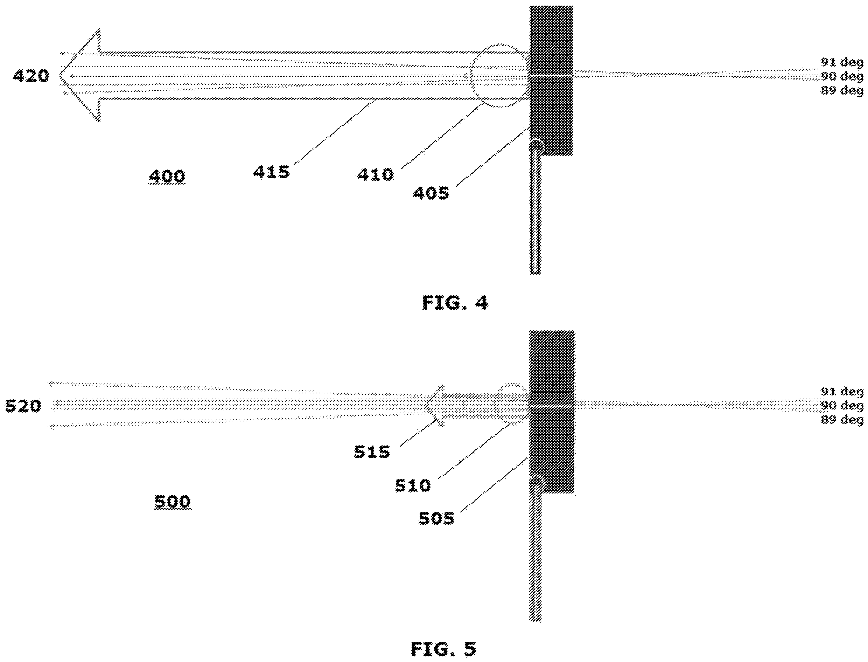

FIGs. 4 and 5 illustrate comparative examples 400,500 as to how use of the smaller training balls according to this disclosure may aid in focusing one's practice "sight picture" in order to more rapidly assess deviations from mishits. By way of example, FIGs. 4 and 5 schematically illustrate the differences in the "feedback" mechanism or perception available to the user.

As shown in FIG. 4, when a regulated golf ball 410 is struck with the putter 405 and sent along an intended path 420, an errant strike of only one degree in either direction may not be perceptibly recognized by the user until the regulated golf ball 410 has traveled some 2.4+ metres (8+ feet) on a 3.7 metre (12 foot) putt (indicated by the large arrow 415). Put another way, it may take that much roll before the user realizes the target is not going to be hit. Again, this is for a plus or minus one degree variance, as shown, which may still be considered a comparatively decent ball strike.

Separately, as shown in FIG. 5, when a practice ball 510 according to this disclosure is struck with the putter 505 and sent along a path 520, an errant strike of only one degree in either direction, when imparted to an embodiment of the disclosed reduced diameter ball, may be perceptibly recognized by the golfer when the practice ball has traveled as little as 0.6 metres (2 feet) on the same 3.7 metre (12 foot) putt (indicated by the comparatively smaller arrow 515). In this regard, the user will be afforded more immediate feedback even in response to the plus or minus one degree variance hit shown in the comparative examples.

With practice, use of a practice ball according to the disclosed embodiments may totally change a user's putting target by reducing it to as little as 4.8 mm (3/16th of an inch). When practicing, the user may first need to hone his or her skill at striking the putt with a perpendicular strike, reducing strike variance to be as close as possible to 90° perpendicularity.

Through extensive experimentation, it has been determined that, based on the smaller size and weight of prototype embodiments, 12% to 17% more force may be needed for the practice ball to roll out cleanly over a same distance. In practice, this translates to the user taking the putter back typically an additional 12.7 mm (half inch) in the takeaway. Based on the muscle memory this action develops in the user, it is anticipated that the typical user will reduce a tendency to leave actual putts short. Undertaking a same motion with a regulated golf ball, a golfer will have a higher likelihood of putting the regulated golf ball "to the back of the hole."

Based on the precision in the focus required to execute a correct strike at impact with embodiments of the disclosed practice ball, a user's putting rhythm as to that individual's putting stroke from take away to strike may change as well. The user may perceive advantages to slowing the putting stroke to focus on a more consistent 90° linear take away.

Visually, when the golfer returns to putting the regulated golf ball into the hole, a more defined target path coinciding with a particular planned sight line may be realized. Thus, the golfer may have substantially eliminated the errors introduced by Putting to Variance and may have had their mind's eye recalibrated to "see" a much larger ball and a much larger hole. Subsequently, the golfer may begin to experience a new level of confidence when stepping up to make a putt.

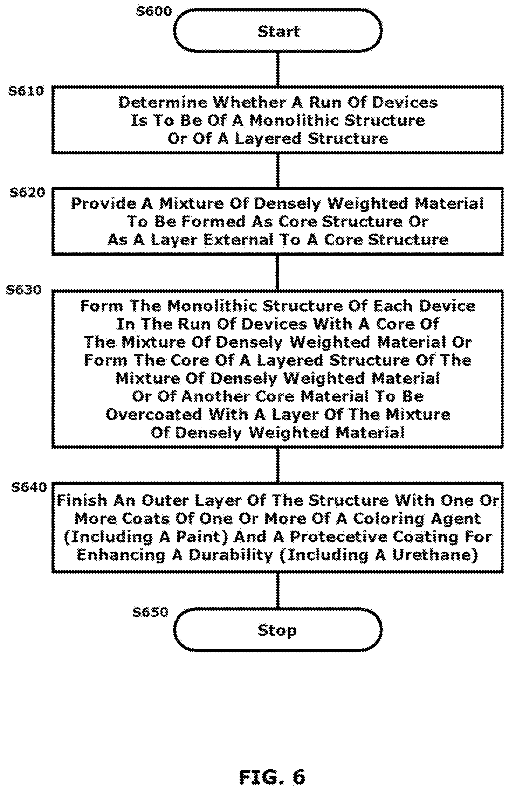

FIG. 6 illustrates a flowchart of an exemplary method for forming the spherical components, spherical bodies or spheres that are in a shape and composition of training balls according to this disclosure. As shown in FIG. 6, operation of the method commences at Step S600 and proceeds to Step S610.

In Step S610, a determination is made whether a run of particular devices is to be of a monolithic structure, or of a layered structure. Operation of the method proceeds to Step S620.

In Step S620, a mixture of a densely weighted material to may be provided. The densely weighted material may be formed of a mixture mesh stainless steel powder, or other metal or stone derivatives, and urethane or other composite used to bind the mixture. The densely weighted material may be formed, for example, of a mixture of 320 mesh stainless steel powder and 60 Shore - D Urethane. It is anticipated that, for example, mixtures of stainless steel to urethane as the densely weighted material may be in a range at least between 87% Stainless Steel and 13% Urethane to 83% Polyurethane and 17% Stainless Steel when the disclosed practice balls are in mass production. Operation of the method proceeds to Step S630.

In Step S630, for a particularly-configured monolithic structure, or a core structure, for the disclosed practice ball, either may be formed of the provided mixture of densely weighted material. In a case of a layered structure, the core may be otherwise formed of a separate material, including, for example, a polyurethane core and then over coated with the mixture of densely weighted material. Operation of the method proceeds to Step S640.

In Step S640, an outer surface of the formed monolithic or layered structure is finished in any one of a number of layers. As examples, the structure of the dense powder and urethane may be coated with, or colored with, polyurethane paint or urethane dye for aesthetics and may be clear coated with polyurethane plastic or any other coating for durability. Operation of the method proceeds to Step S650, where operation of the method ceases.

All combinations and variations of the disclosed structures are available and encompassed by this disclosure. As indicated above, it is recognized b that there are more than 500 urethane/polyurethane chemicals and chemical compounds that vary in density. In this regard, it is anticipated that, for example, mixtures of stainless steel to urethane for the monolithic, or other core, structure may be in a range at least between 87% or less Stainless Steel and 13% or less Urethane to 83% Polyurethane or less and 17% or less Stainless Steel when the disclosed practice balls are in mass production.

With the urethane coatings, the surfaces of the disclosed embodiments of the practice balls are substantially smooth, in some contrast to the dimpled regulated golf ball. An objective of producing a practice ball according to this disclosure with a substantially smooth surface may be to reduce the friction between the ball and the surface on which it rests/rolls. This is not, however, to imply that all dimpling or surface texture must necessarily be removed. The variance in the "look" as to the disclosed embodiments is purposeful in that the practice ball be, in no way, mistaken for a regulated golf ball, which it is not, nor is it intended to be.

The above-described exemplary systems, methods, apparatus, and/or devices reference certain conventional components, materials, and real-world use cases to provide a brief, general description of suitable operating and integration environments in which the subject matter of this disclosure may be implemented for familiarity and ease of understanding.

Those skilled in the fields of endeavor surrounding golf as an endeavor, and golf training, will likely appreciate that other embodiments of the disclosed subject matter may be practiced in many training methods, systems, techniques, processes and/or devices, including various structural components for providing sub-scale training balls to enhance putting practice substantially in the manner described above or otherwise.

The exemplary depicted sequence of method steps represents one example of a corresponding sequence of acts for implementing the functions described in the steps of the above-outlined exemplary method. The exemplary depicted steps may be executed in any reasonable order to carry into effect the objectives of the disclosed embodiments. No particular order to the disclosed steps of the method is necessarily implied by the depiction in FIG. 6, except where a particular method step is reasonably a necessary precondition to execution of any other method step.

Those of skill in the art may recognize that particular embodiments according to the disclosed systems, devices, methods, techniques and schemes may find utility in areas other than those described in detail above. Precision engagement of reduced sized or diameter practice balls may find utility in other ways and in other sports. The disclosed schemes are intended to be particularly adapted to putting training, but are not intended to be limited thereto. As indicated above, no particular configuration should be read into the description of the exemplary disclosed embodiments.

The disclosed systems, devices, methods, techniques and/or schemes represent particular improvements upon the currently available training aids employed, for example for putting training according to the exemplary advantages mentioned above. Other ancillary benefits may be recognized and achieved through extended use of, and practice with, embodiments of the disclosed practice balls. The scope of the known, potential and yet-to-be discovered advantages is boundless.

Specific reference to the above-discussed embodiments for the disclosed reduced diameter practice balls and characteristics of the exemplary embodiments specifically directed toward use as a putting training aid should not be interpreted to constrain the disclosed systems, devices, methods, techniques and/or schemes to only those embodiments. The depicted and described embodiments are included for non-limiting illustration of the disclosed concepts for implementing these systems, devices, methods, techniques, and/or schemes sports training aids. All of the above depictions and/or descriptions should, therefore, be interpreted as being exemplary only, and not limiting the disclosed schemes, in any manner.

Features and advantages of the disclosed embodiments are set forth in this disclosure and may be, at least in part, obvious from this detailed description or may be learned by practice of the disclosed embodiments. The features and advantages of the disclosed embodiments may be realized and obtained by means of the instruments and combinations of features particularly described.

## Claims

1. A golf training ball (210, 220, 230), comprising:
a spherical core (302, 312) formed of a first material; and
an outer durable coating (304, 314) of a second material surrounding the spherical core (302, 312),
wherein an outer diameter of the ball is in a range of 22mm to 41mm, and a weight of the ball is in a range of between 15g and 44g;
the first material comprising a mixture of a solid material and a binding material used to bind the mixture;
the solid material comprising a dense powder comprising at least one of a stainless steel powder, a mesh stainless steel powder, another metal material, and one or more stone derivatives;
the binding material comprising at least one of a urethane, a polyurethane, an adhesive and another composite or matrix material; and
an outer surface of the outer durable coating (304, 314) being a substantially smooth surface.

2. The ball (210, 220, 230) of claim 1, the mixture comprising 320 mesh stainless steel powder and 60 Shore - D Urethane.

3. The ball (210, 220, 230) of claim 1, components of the mixture being in a range of 87% or less stainless steel and 13% or less urethane.

4. The ball (210, 220, 230) of claim 1, components of the mixture being in a range of 83% or less polyurethane and 17% or less stainless steel.

5. The ball (210, 220, 230) of claim 1, the second material comprising at least one of a clear polyurethane and plastic.

6. The ball (210, 220, 230) of claim 1, the second material comprising a coloring agent comprising at least one of a polyurethane paint and a urethane dye.

7. The ball (210, 220, 230) of claim 1, further comprising at least one separate layer (316) between the spherical core (312) and the outer durable coating (314).

8. The ball (210, 220, 230) of claim 7, the first material comprising a mixture of a solid material and a binding material used to bind the mixture, and
the at least one separate layer (316) being formed of a polyurethane.

9. The ball (210, 220, 230) of claim 7, the first material comprising a polyurethane, and
the at least one separate layer (316) being formed of a mixture of a solid material and a binding material used to bind the mixture.

10. A method of forming the golf training ball according to claim 1 (210, 220, 230), comprising:
forming a spherical core (302, 312) of a first material; and
surrounding the spherical core (302, 312) with an outer durable coating (304, 314) of a second material,
wherein an outer diameter of the ball is in a range of 22mm to 41mm, and a weight of the ball is in a range of between 15g and 44g;
the first material comprising a mixture of a solid material and a binding material used to bind the mixture;
the solid material comprising a dense powder comprising at least one of a stainless steel powder, a mesh stainless steel powder, another metal material, and one or more stone derivatives;
the binding material comprising at least one of a urethane, a polyurethane, an adhesive and another composite or matrix material; and
an outer surface of the outer durable coating (304, 314) being a substantially smooth surface.

## Patentansprüche

1. Golftrainingsball (210, 220, 230), Folgendes umfassend:
einen kugelförmigen Kern (302, 312), der aus einem ersten Material ausgebildet ist; und
eine äußere dauerhafte Beschichtung (304, 314) aus einem zweiten Material, das den kugelförmigen Kern (302, 312) umgibt,
wobei ein Außendurchmesser des Balls in einem Bereich von 22 mm bis 41 mm ist und ein Gewicht des Balls in einem Bereich zwischen 15 g und 44 g ist;
wobei das erste Material eine Mischung aus einem festen Material und einem Bindematerial umfasst, das verwendet wird, um die Mischung zu binden;
wobei das feste Material ein dichtes Pulver umfasst, das mindestens eines von einem Edelstahlpulver, einem Edelstahlpulver mit Maschenzahl, einem anderen Metallmaterial und mindestens einem Steinderivat umfasst;
wobei das Bindematerial mindestens eines von einem Urethan, einem Polyurethan, einem Klebstoff und einem anderen Verbund- oder Matrixmaterial umfasst; und
wobei eine äußere Oberfläche der äußeren dauerhaften Beschichtung (304, 314) eine im Wesentlichen glatte Oberfläche ist.

2. Ball (210, 220, 230) nach Anspruch 1, wobei die Mischung Edelstahlpulver mit Maschenzahl 320 und Urethan mit Shore-Härte D 60 umfasst.

3. Ball (210, 220, 230) nach Anspruch 1, wobei Komponenten der Mischung in einem Bereich von 87 % oder weniger Edelstahl und 13 % oder weniger Urethan sind.

4. Ball (210, 220, 230) nach Anspruch 1, wobei Komponenten der Mischung in einem Bereich von 83 % oder weniger Polyurethan und 17 % oder weniger Edelstahl sind.

5. Ball (210, 220, 230) nach Anspruch 1, wobei das zweite Material mindestens eines von einem klaren Polyurethan und Kunststoff umfasst.

6. Ball (210, 220, 230) nach Anspruch 1, wobei das zweite Material ein Färbemittel umfasst, das mindestens eines von einem Polyurethan-Anstrich und einem Urethan-Farbstoff umfasst.

7. Ball (210, 220, 230) nach Anspruch 1, weiterhin mindestens eine separate Schicht (316) zwischen dem kugelförmigen Kern (312) und der äußeren dauerhaften Beschichtung (314) umfassend.

8. Ball (210, 220, 230) nach Anspruch 7, wobei das erste Material eine Mischung aus einem festen Material und einem Bindematerial umfasst, das verwendet wird, um die Mischung zu binden, und
wobei die mindestens eine separate Schicht (316) aus einem Polyurethan ausgebildet ist.

9. Ball (210, 220, 230) nach Anspruch 7, wobei das erste Material ein Polyurethan umfasst und
wobei die mindestens eine separate Schicht (316) aus einer Mischung aus einem festen Material und einem Bindematerial ausgebildet ist, das verwendet wird, um die Mischung zu binden.

10. Verfahren zum Ausbilden des Golftrainingsballs nach Anspruch 1 (210, 220, 230), Folgendes umfassend:
Ausbilden eines kugelförmigen Kerns (302, 312) aus einem ersten Material; und
Umgeben des kugelförmigen Kerns (302, 312) mit einer äußeren dauerhaften Beschichtung (304, 314) aus einem zweiten Material,
wobei ein Außendurchmesser des Balls in einem Bereich von 22 mm bis 41 mm ist und ein Gewicht des Balls in einem Bereich zwischen 15 g und 44 g ist;
wobei das erste Material eine Mischung aus einem festen Material und einem Bindematerial umfasst, das verwendet wird, um die Mischung zu binden;
wobei das feste Material ein dichtes Pulver umfasst, das mindestens eines von einem Edelstahlpulver, einem Edelstahlpulver mit Maschenzahl, einem anderen Metallmaterial und mindestens einem Steinderivat umfasst;
wobei das Bindematerial mindestens eines von einem Urethan, einem Polyurethan, einem Klebstoff und einem anderen Verbund- oder Matrixmaterial umfasst; und
wobei eine äußere Oberfläche der äußeren dauerhaften Beschichtung (304, 314) eine im Wesentlichen glatte Oberfläche ist.

## Revendications

1. Balle d'entraînement au golf (210, 220, 230), comprenant :
un noyau sphérique (302, 312) constitué d'un premier matériau ; et
un revêtement extérieur durable (304, 314) d'un second matériau enveloppant le noyau sphérique (302, 312),
dans lequel le diamètre extérieur de la balle est dans une plage de 22 mm à 41 mm et le poids de la balle est dans une plage comprise entre 15 g et 44 g ;
le premier matériau comprenant un mélange d'un matériau solide et d'un matériau liant utilisé pour lier le mélange ;
le matériau solide comprenant une poudre dense comprenant au moins une parmi une poudre d'acier inoxydable, une poudre d'acier inoxydable tamisée, un autre matériau métallique et un ou plusieurs dérivés de pierre ;
le matériau liant comprenant au moins un parmi un uréthane, un polyuréthane, un adhésif et un autre matériau composite ou à matrice ; et
une surface extérieure du revêtement durable extérieur (304, 314) étant une surface sensiblement lisse.

2. Balle (210, 220, 230) selon la revendication 1, le mélange comprenant de la poudre d'acier inoxydable 320 mesh et de l'uréthane ayant une dureté Shore D de 60.

3. Balle (210, 220, 230) selon la revendication 1, les composants du mélange étant dans une plage de 87 % ou moins d'acier inoxydable et 13 % ou moins d'uréthane.

4. Balle (210, 220, 230) selon la revendication 1, les composants du mélange étant dans une plage de 83 % ou moins de polyuréthane et 17 % ou moins d'acier inoxydable.

5. Balle (210, 220, 230) selon la revendication 1, le second matériau comprenant au moins un parmi un polyuréthane et un plastique transparents.

6. Balle (210, 220, 230) selon la revendication 1, le second matériau comprenant un agent colorant comprenant au moins un parmi une peinture de polyuréthane et une matière colorante d'uréthane.

7. Balle (210, 220, 230) selon la revendication 1, comprenant en outre au moins une couche séparée (316) entre le noyau sphérique (312) et le revêtement extérieur durable (314).

8. Balle (210, 220, 230) selon la revendication 7, le premier matériau comprenant un mélange d'un matériau solide et d'un matériau liant utilisé pour lier le mélange et
l'au moins une couche séparée (316) étant constituée d'un polyuréthane.

9. Balle (210, 220, 230) selon la revendication 7, le premier matériau comprenant un polyuréthane et
l'au moins une couche séparée (316) étant constituée d'un mélange d'un matériau solide et d'un matériau liant utilisé pour lier le mélange.

10. Procédé de formation de la balle d'entraînement au golf selon la revendication 1 (210, 220, 230), comprenant :
la formation d'un noyau sphérique (302, 312) d'un premier matériau ; et
l'enveloppement du noyau sphérique (302, 312) d'un revêtement extérieur durable (304, 314) d'un second matériau,
dans lequel le diamètre extérieur de la balle est dans une plage de 22 mm à 41 mm et le poids de la balle est dans une plage comprise entre 15 g et 44 g ;
le premier matériau comprenant un mélange d'un matériau solide et d'un matériau liant utilisé pour lier le mélange ;
le matériau solide comprenant une poudre dense comprenant au moins une parmi une poudre d'acier inoxydable, une poudre d'acier inoxydable tamisée, un autre matériau métallique et un ou plusieurs dérivés de pierre ;
le matériau liant comprenant au moins un parmi un uréthane, un polyuréthane, un adhésif et un autre matériau composite ou à matrice ; et
une surface extérieure du revêtement durable extérieur (304, 314) étant une surface sensiblement lisse.
